# FASCICULE DE BREVET EUROPEEN

(11) **EP 2 736 627 B1**
(45) Date de publication et mention de la délivrance du brevet: **02.11.2016**
(21) Numéro de dépôt: 12738509.4
(22) Date de dépôt: 20.06.2012
(51) Int. Cl.: B01D 53/26, C01B 31/20, F25J 3/02

(54) **PROCÉDÉ ET APPAREIL DE REFROIDISSEMENT ET DE COMPRESSION D'UN GAZ HUMIDE RICHE EN DIOXYDE DE CARBONE**
VERFAHREN UND VORRICHTUNG ZUM KÜHLEN UND VERDICHTEN EINES KOHLENDIOXIDREICHEN FEUCHTGASES
PROCESS AND APPARATUS FOR COOLING AND COMPRESSING A WET GAS RICH IN CARBON DIOXIDE

(30) Priorité: 25.07.2011 FR 1156759
(43) Date de publication de la demande: 04.06.2014
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); COURT, Philippe, F-94300 Vincennes (FR); DARDE, Arthur, F-75005 Paris (FR)
(74) Mandataire: Mercey, Fiona Susan
(86) Numéro de dépôt international: PCT/FR2012/051385
(87) Numéro de publication internationale: WO 2013/014349

(56) Documents cités:
- EP-A1- 2 335 804
- EP-A1- 2 335 806
- WO-A1-2009/127217
- WO-A1-2011/154535
- FR-A1- 2 954 179

## Description

La présente invention est relative à un procédé et à un appareil de refroidissement et de compression d'un gaz humide riche en dioxyde de carbone.

Un gaz riche en dioxyde de carbone dans le contexte de cette invention contient au moins 80% mol de dioxyde de carbone voire au moins 90% mol. de dioxyde de carbone.

Un gaz humide contient de l'eau.

Comme précédemment décrit, un procédé innovant, pour comprimer à moindre coût des flux humides riches en CO₂, consiste à refroidir le gaz avant la compression de telle sorte à condenser suffisamment d'eau pour éviter de condenser dans le compresseur, évitant par là même les phénomènes de corrosion et ouvrant la voie à l'utilisation d'un compresseur en acier au carbone ou faiblement allié. La présence d'un agent antigel (le méthanol notamment) dans l'eau de réfrigération et le gaz humide permet de baisser suffisamment la température avant la compression en évitant le gel de l'eau encore présente.

L'invention se prête particulièrement bien à la compression des flux dépourvus de NOx dont il est connu que les interactions avec le méthanol sont de nature à détruire ce dernier.

Lorsque le fluide à traiter est de plus du CO₂ quasiment pur mais humide, une amélioration notable peut encore être apportée au système. Il s'agît de mélanger le CO₂ vaporisé afin de refroidir la boucle d'eau et de méthanol avec le fluide ainsi refroidi. Lorsque la source de CO₂ humide se trouve loin (à au moins 50 mètres par exemple) du compresseur de CO₂ permettant d'amener le CO₂ vaporisé à la pression de condensation (entre 50 et 100 bars a en général, selon les températures de l'eau de réfrigération disponible), cette solution permet de réduire le nombre de lignes de transfert entre les différentes unités.

Ainsi si l'appareil traite plusieurs sources de CO₂, dont au moins une est une source de CO₂ humide mais quasi-pur (teneur en CO₂ > 98% en base sèche par exemple), par exemple provenant de lavage aux amines situées à plusieurs centaines de mètres ou des kilomètres, il suffira d'apporter du CO₂ liquide (par canalisation ou par camion en assurant des remplissages réguliers) de ces sources éloignées. Le CO₂ vaporisé peut être mélangé au CO₂ comprimé avant son transfert par canalisation vers l'unité de traitement en aval. En alternative, la fraction de CO₂ peut provenir du liquéfacteur faisant partie de l'appareil, une partie du liquide produit étant recyclée sous forme liquide pour refroidir le méthanol par vaporisation.

Le CO₂ liquide, s'il est apporté par canalisation, pourra soit être apporté à la pression de condensation et donc à une température proche de l'ambiante (pression > 60 bars), réduisant les frais d'isolation, mais imposant une pression de calcul de la ligne nettement plus importante ; soit directement à la pression de vaporisation, aux pertes de charge près. Ainsi pour une utilisation vers -20°C, l'investissement d'une ligne opérée à 20 bars (mais devant être isolée car étant à - 20°C), sera à comparer à une ligne ne devant pas dépasser 25°C mais contenant du gaz à 70 bars environ.

En solution de base, on recommande de ne pas détendre le CO₂ liquide après sa vaporisation : il est alors disponible vers 20 bars, à une pression adaptée pour le transport « local » de CO₂ qui proviendrait de l'unité de compression du gaz humide.

On peut aussi envisager de turbiner le gaz riche en dioxyde de carbone après sa vaporisation avant de le mélanger avec le gaz refroidi, éventuellement à un inter-étage du compresseur de gaz humide.

On peut aussi envisager de sous-refroidir le gaz d'alimentation et/ou le mélange eau-agent antigel (par exemple méthanol) avec le gaz turbiné.

EP-A-2335804 et EP-A-2335806 décrivent un appareil selon le préambule de la revendication 5.

FR2954179 décrit un procédé et appareil de séchage et de compression d'un flux riche en CO₂.

Selon un objet de l'invention, il est prévu un procédé de refroidissement et de compression d'un gaz riche en dioxyde de carbone selon la revendication 1.

Selon d'autres objets facultatifs :
- le compresseur est en acier carbone ou faiblement allié,
- le débit de gaz riche en dioxyde de carbone comprimé dans le compresseur est liquéfié, éventuellement après une étape d'épuration, pour former un liquide riche en dioxyde de carbone,
- le liquide riche en dioxyde de carbone provient d'une source extérieure et un gaz formé en vaporisant le liquide est mélangé au gaz riche en dioxyde de carbone en amont, en aval ou dans le compresseur,
- le gaz formé par la vaporisation est détendu dans une turbine, le liquide étant vaporisé à entre 10 et 125 bars abs, voire entre 20 et 35 bars abs,
- le gaz détendu dans la turbine sert à refroidir le gaz d'alimentation et/ou le mélange d'eau et antigel en amont de la colonne de refroidissement et/ou à refroidir le liquide riche en dioxyde de carbone.

Selon un autre objet de l'invention, il est prévu un appareil selon la revendication 5.

L'appareil comprend éventuellement :
- des moyens de liquéfaction et éventuellement des moyens d'épuration, reliés au refoulement du compresseur pour former un liquide riche en dioxyde de carbone,
- une conduite pour envoyer un gaz, formé dans l'échangeur par la vaporisation du liquide riche en dioxyde de carbone, en tête de la colonne,
- une turbine pour détendre le gaz formé par la vaporisation du liquide riche en dioxyde de carbone.

L'invention se porte également sur une installation de liquéfaction de gaz riche en dioxyde de carbone comprenant un appareil tel que décrit ci-dessus et au moins un moyen de liquéfaction de gaz riche en dioxyde de carbone, ce moyen étant relié à l'échangeur.

L'invention sera décrite en plus de détail en se référant à la figure qui illustre un appareil selon l'invention.

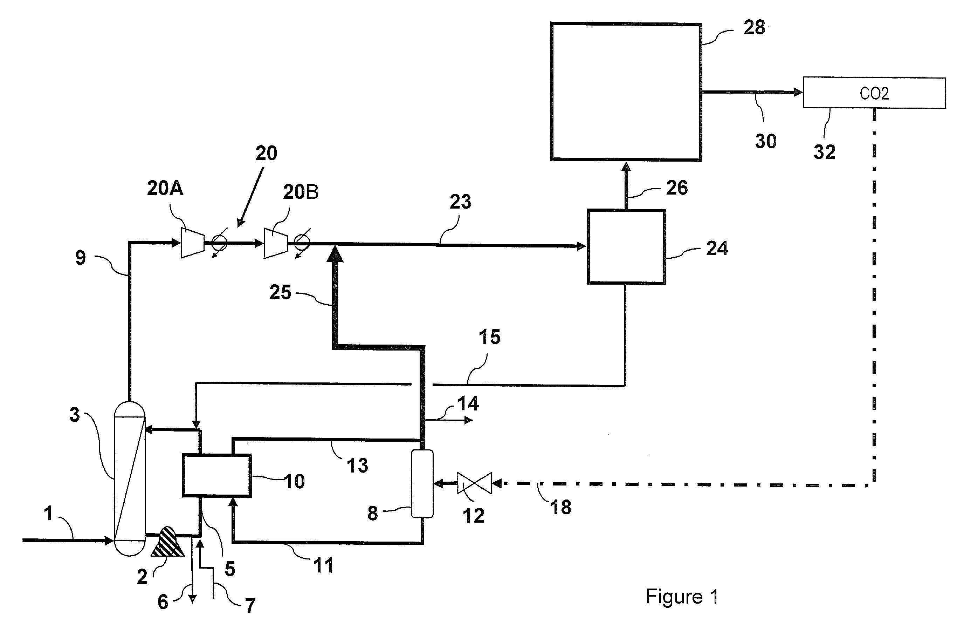

Dans la Figure 1, un fluide 1 riche en CO₂ et humide est envoyé à une colonne 3 de lavage à l'eau et à un produit antigel, par exemple du méthanol, opérant à une pression inférieure à 10 bars, de préférence à la pression atmosphérique. L'eau est extraite en cuve de la colonne 3, pompée par une pompe 2 et divisée en deux. Une partie 6 sert de purge et le reste 5 est refroidi dans l'échangeur 10 face à une vaporisation de CO₂ liquide 11. Le liquide 5 refroidi reçoit le recyclage d'eau et de méthanol 15 séparé en aval du compresseur 20 (représenté comme multi-étagé sur les figures avec deux étages 20A, 20B) puis est injecté en tête de la colonne 3 pour refroidir le CO₂ humide. Ce faisant, la teneur en eau de ce CO₂ est abaissée de telle sorte à ce qu'il n'y ait plus de condensation dans le compresseur 20 qui pourra ainsi être conçu en acier carbone ou faiblement allié

Un gaz 9 contenant environ 1500ppm d'eau et de méthanol sort en tête de la colonne 3, est comprimé dans le compresseur 20 en acier carbone ou faiblement allié. Le gaz comprimé 23 est envoyé à une unité 24 de récupération et de recyclage du méthanol et de l'eau. Le méthanol et l'eau entraînés sont séparés dans l'unité 24, éventuellement par lavage au CO₂ liquide, et recyclés dans le fluide 5 via le flux 15. Le méthanol éventuellement perdu dans le système par les purges ou la production gazeuse est compensé via la ligne 7 et mélangé au flux 5.

Ensuite suit éventuellement une liquéfaction du produit final riche en CO₂ dans l'unité de liquéfaction 28 afin de le mettre à disposition d'un organe de transport (par canalisation ou bateau) ou pour son utilisation dans un procédé et éventuellement une épuration facultative du gaz riche en CO₂ de ses constituants légers (oxygène, argon, hydrogène, monoxyde de carbone, azote, etc...) et/ou de ses constituants plus lourds (NO₂, N₂O₄, SO₂, méthanol, eau, etc...). Les variantes possibles de cette étape sont abondamment décrites dans de précédentes demandes de brevet. Eventuellement une étape de compression du produit final riche en CO₂ peut être présente. Le CO₂ épuré 26 provenant de l'unité 24, dans le cas illustré, est envoyé à l'unité 28 pour produire du CO₂ liquide 30 qui est lui-même envoyé à un stockage 32.

Pour refroidir le mélange eau-antigel dans l'échangeur 10, deux solutions sont possibles. La plus connue est d'utiliser un groupe froid sur le site, ce qui impose d'avoir des moyens de compression additionnels, dont l'arrêt perturberait le fonctionnement de l'unité. L'invention consiste à réduire l'impact de besoin de froid dans l'échangeur 10 sur la disponibilité du CO₂ comprimé par le système.

Ainsi un liquide riche en dioxyde de carbone 18 est amené à pression élevée (par exemple à plus que 15 bars abs, voire à plus que 50 bars abs, allant jusqu'à 125 bars abs). Il provient d'une source extérieure ou préférentiellement de l'unité de liquéfaction 28 traitant le CO₂ comprimé dans le compresseur 20, par exemple par canalisation ou livré par camion.

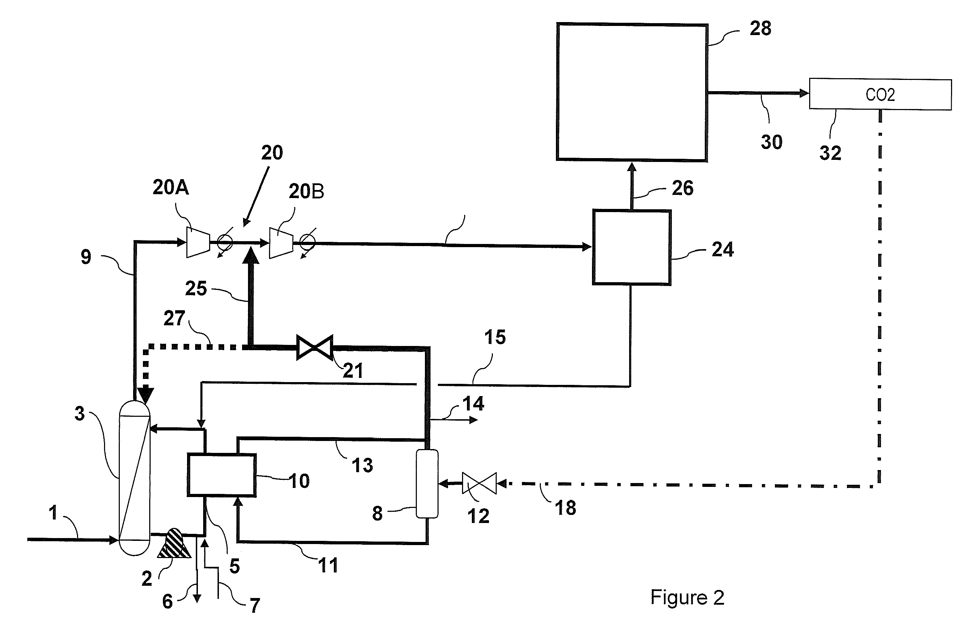

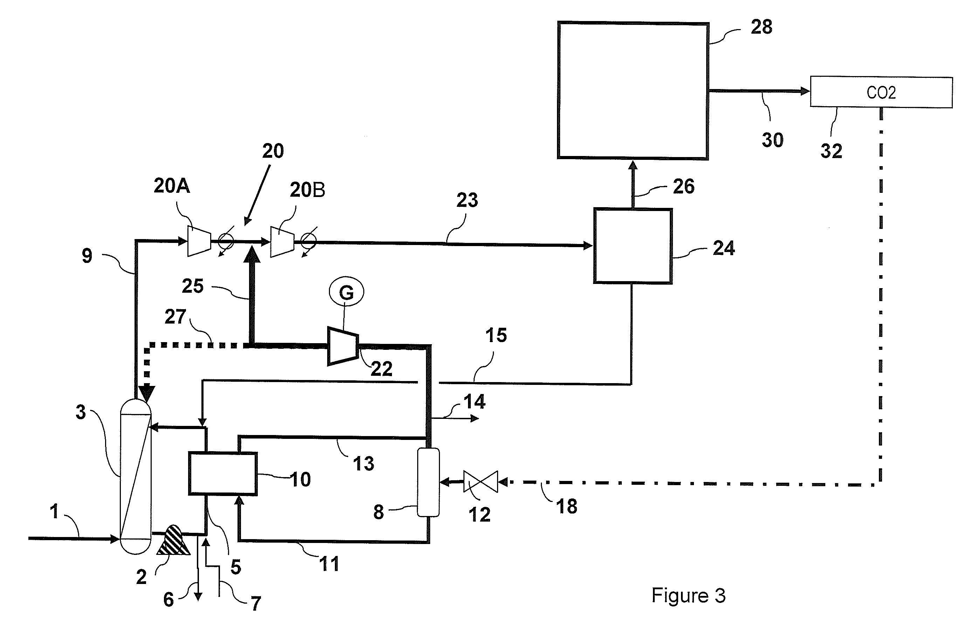

Le liquide 18 riche en dioxyde de carbone est détendu dans la vanne 12 et est envoyé à un séparateur de phases 8. Le liquide 11 du séparateur de phases 8 se vaporise dans l'échangeur 10 à entre 10 et 125 bars abs, voire entre 20 et 35 bars abs pour former un gaz 13. Le gaz 13 se mélange au gaz provenant du séparateur de phases 8. Ce gaz 13 sous pression à entre 10 et 125 bars abs, voire entre 20 et 35 bars abs et riche en dioxyde de carbone peut constituer un produit 14 de l'installation ou sinon être envoyé en tête de colonne par la conduite 27 ou mélangé avec le gaz 9 issu de la colonne. Il y a trois manières possibles illustrés pour mélanger le gaz 13 au gaz 9 issu de la colonne : il peut être mélangé à la sortie ou à un inter-étage du compresseur 20 si les pressions le permettent (il n'y a alors pratiquement pas de perte de l'énergie de pression de ce fluide) par la conduite 25 reliée entre les étages 20A, 20B, par exemple. Il peut aussi être détendu dans une vanne 21 (figure 2) ou éventuellement une turbine génératrice 22 (figure 3) si l'énergie récupérée justifie cet investissement.

Le gaz 13 et éventuellement le gaz obtenu après détente dans la turbine génératrice 22 (Figure 2) peuvent être réchauffés avant mélange avec le gaz 9 pour pré-refroidir le liquide 18 et/ou le liquide 5 et/ou le gaz avant la turbine 22. Ces échanges thermiques visent à réduire les pertes d'entropie du système, mais ne sont pas montrés sur les figures.

D'autres agents antigel peuvent être utilisés à la place du méthanol, par exemple le glycol.

## Revendications

1. Procédé de refroidissement et de compression d'un gaz riche en dioxyde de carbone dans lequel :
i) un gaz d'alimentation (1) humide et riche en dioxyde de carbone est refroidi à l'eau mélangée avec un agent antigel dans une colonne (3) pour produire un débit de gaz riche en dioxyde de carbone appauvri en eau et refroidi,
ii) le débit de gaz riche en dioxyde de carbone est comprimé dans un compresseur (20) et
iii) un liquide riche en dioxyde de carbone (18) se vaporise en refroidissant le mélange d'eau et d'agent antigel avant d'envoyer ce mélange à la colonne de refroidissement du gaz riche en dioxyde de carbone, ce liquide pouvant provenir d'une source extérieure et/ou être constitué au moins partiellement par du liquide (30) produit par ou dérivé de la liquéfaction du débit de gaz riche en dioxyde de carbone comprimé dans le compresseur
**caractérisé en ce que** le gaz (13, 25) formé par la vaporisation est mélangé avec le débit de gaz riche en dioxyde de carbone en aval ou à un inter-étage du compresseur (20).

2. Procédé selon la revendication 1 dans lequel le gaz (25) formé par la vaporisation du liquide à une pression entre 10 et 125 bars abs est détendu dans une turbine (22).

3. Procédé selon la revendication 2 dans lequel le gaz (25) formé par la vaporisation du liquide a été vaporisé à une pression entre 20 et 35 bars abs.

4. Procédé selon la revendication 2 ou 3 dans lequel le gaz détendu dans la turbine (22) sert à refroidir le gaz d'alimentation (1) et/ou le mélange d'eau et antigel (5, 15) en amont de la colonne de refroidissement et/ou à refroidir le liquide (18) riche en dioxyde de carbone.

5. Appareil de refroidissement et de compression d'un gaz riche en dioxyde de carbone comprenant une colonne (3) pour refroidir à l'eau additionnée d'un agent antigel un gaz d'alimentation (1) humide et riche en dioxyde de carbone pour produire un débit de gaz riche en dioxyde de carbone appauvri en eau et refroidi, un compresseur, une conduite pour envoyer le débit de gaz riche en dioxyde de carbone de la colonne au compresseur, un échangeur de chaleur (10), une conduite pour envoyer le mélange d'eau et d'agent antigel à l'échangeur de chaleur en amont de la colonne, une conduite pour envoyer un liquide riche en dioxyde de carbone à l'échangeur pour refroidir l'eau et l'agent antigel, ce liquide provenant d'une source extérieure et/ou étant constitué au moins partiellement par une partie du dioxyde de carbone gazeux comprimé puis liquéfié **caractérisé en ce qu'**il comprend des moyens pour envoyer un gaz formé dans l'échangeur (10) par la vaporisation du liquide riche en dioxyde de carbone et des moyens pour le mélanger avec le débit de gaz (9) riche en dioxyde de carbone en aval ou à un inter-étage du compresseur (20).

6. Appareil selon la revendication 5 comprenant une conduite pour envoyer un gaz, formé dans l'échangeur (10) par la vaporisation du liquide riche en dioxyde de carbone, en tête de la colonne (3).

7. Appareil selon la revendication 5 ou 6 comprenant une turbine (22) pour détendre le gaz formé par la vaporisation du liquide riche en dioxyde de carbone.

8. Appareil selon l'une des revendications 5 à 7 dans lequel le compresseur est en acier carbone ou faiblement allié.

9. Installation de liquéfaction de gaz riche en dioxyde de carbone comprenant un appareil selon l'une des revendications 5 à 8 et au moins un moyen de liquéfaction (28) de gaz riche en dioxyde de carbone, ce moyen étant relié à l'échangeur.

## Patentansprüche

1. Verfahren zum Kühlen und Verdichten eines kohlenstoffdioxidreichen Gases, wobei:
i) ein feuchtes und kohlenstoffdioxidreiches Zufuhrgas (1) in einer Kolonne (3) mit Wasser gekühlt wird, das mit einem Frostschutzmittel vermischt ist, um eine kohlenstoffdioxidreiche, wasserarme und gekühlte Gasströmung zu erzeugen,
ii) die kohlenstoffdioxidreiche Gasströmung in einem Verdichter (20) verdichtet wird, und
iii) eine kohlenstoffdioxidreiche Flüssigkeit (18) verdampft, indem man das Gemisch aus Wasser und Frostschutzmittel abkühlt, bevor man dieses Gemisch in die Kolonne zum Kühlen des kohlenstoffdioxidreichen Gases schickt, wobei diese Flüssigkeit aus einer externen Quelle stammen kann, und/ oder zumindest teilweise aus der Flüssigkeit (30) gebildet werden kann, welche durch die Verflüssigung des kohlenstoffdioxidreichen Gases erzeugt oder abgeleitet wird, welches im Verdichter verdichtet wird
**dadurch gekennzeichnet, dass** das durch Verdampfen gebildete Gas (13, 25) stromabwärts oder in einer Zwischenstufe des Verdichters (20) mit der kohlenstoffdioxidreichen Gasströmung vermischt wird.

2. Verfahren nach Anspruch 1, wobei das durch Verdampfen der Flüssigkeit mit einem Druck zwischen 10 und 125 bar abs. gebildete Gas (25) in einer Turbine (22) entspannt wird.

3. Verfahren nach Anspruch 2, wobei das durch Verdampfen der Flüssigkeit gebildete Gas (25) mit einem Druck zwischen 20 und 35 bar abs. verdampft worden ist.

4. Verfahren nach Anspruch 2 oder 3, wobei das in der Turbine (22) entspannte Gas dazu dient, das Zufuhrgas (1) und/ oder das Gemisch aus Wasser und Frostschutzmittel (5, 15) stromaufwärts der Kühlkolonne zu kühlen, und/ oder die kohlenstoffdioxidreiche Flüssigkeit (18) zu kühlen.

5. Gerät zum Kühlen und Verdichten eines kohlenstoffdioxidreichen Gases, eine Kolonne (3) zum Kühlen eines feuchten und kohlenstoffdioxidreichen Zufuhrgases (1) mit Wasser umfassend, dem Frostschutzmittel beigegeben wird, um eine kohlenstoffdioxidreiche, wasserarme und gekühlte Gasströmung zu erzeugen, einen Verdichter, eine Leitung zum Schicken der kohlenstoffdioxidreichen Gasströmung von der Kolonne zum Verdichter, einen Wärmetauscher (10), eine Leitung zum Schicken des Gemisches aus Wasser und Frostschutzmittel zum Wärmetauscher stromaufwärts der Kolonne, eine Leitung zum Schicken einer kohlenstoffdioxidreichen Flüssigkeit zum Tauscher zum Kühlen des Wassers und des Frostschutzmittels, wobei diese Flüssigkeit aus einer externen Quelle stammt, und/ oder zumindest teilweise aus einem Teil des gasförmigen Kohlenstoffdioxids gebildet wird, das verdichtet und danach verflüssigt wird, **dadurch gekennzeichnet, dass** es Mittel zum Schicken eines Gases umfasst, das im Tauscher (10) durch das Verdampfen der kohlenstoffdioxidreichen Flüssigkeit gebildet wird, sowie Mittel, um es stromabwärts oder in einer Zwischenstufe des Verdichters (20) mit der kohlenstoffdioxidreichen Gasströmung (9) zu mischen.

6. Gerät nach Anspruch 5, eine Leitung zum Schicken eines Gases umfassend, das im Tauscher (10) durch Verdampfen der kohlenstoffdioxidreichen Flüssigkeit am Kopf der Kolonne (3) gebildet wird.

7. Gerät nach Anspruch 5 oder 6, eine Turbine (22) zum Entspannen des Gases umfassend, das durch das Verdampfen der kohlenstoffdioxidreichen Flüssigkeit gebildet wird.

8. Gerät nach einem der Ansprüche 5 bis 7, wobei der Verdichter aus Kohlenstoffstahl oder schwach legiertem Stahl gefertigt ist.

9. Anlage zum Verflüssigen von kohlenstoffdioxidreichem Gas, ein Gerät nach einem der Ansprüche 5 bis 8 und zumindest ein Mittel zum Verflüssigen (28) von kohlenstoffdioxidreichem Gas umfassend, wobei dieses Mittel mit dem Tauscher verbunden ist.

## Claims

1. Method for cooling and compressing a gas that is rich in carbon dioxide wherein:
i) a wet feed gas (1) that is rich in carbon dioxide is cooled with water mixed with an antifreeze agent in a column (3) in order to produce a flow of gas that is rich in carbon dioxide, water-depleted and cooled,
ii) the flow of gas rich in carbon dioxide is compressed in a compressor (20) and
iii) a liquid rich in carbon dioxide (18) is vaporised by cooling the mixture of water and antifreeze agent before sending this mixture to the column for cooling the gas that is rich in carbon dioxide, with this liquid able to originate from an external source and/or be constituted at least partially by the liquid (30) produced by or derived from the liquefaction of the flow of gas that is rich in carbon dioxide compressed in the compressor
**characterised in that** the gas (13, 25) formed by the vaporisation is mixed with the flow of gas that is rich in carbon dioxide downstream or at an interstage of the compressor (20).

2. Method according to claim 1 wherein the gas (25) formed by the vaporisation of the liquid at a pressure between 10 and 125 bars abs is expanded in a turbine (22).

3. Method according to claim 2 wherein the gas (25) formed by the vaporisation of the liquid was vaporised at a pressure between 20 and 35 bars abs.

4. Method according to claim 2 or 3 wherein the gas expanded in the turbine (22) is used to cool the feed gas (1) and/or the mixture of water and antifreeze (5, 15) upstream of the cooling column and/or to cool the liquid (18) that is rich in carbon dioxide.

5. Apparatus for cooling and compressing a gas that is rich in carbon dioxide comprising a column (3) for cooling with water and with an added antifreeze agent a wet feed gas (1) that is rich in carbon dioxide in order to produce a flow of gas that is rich in carbon dioxide, water-depleted and cooled, a compressor, a duct for sending the flow of gas that is rich in carbon dioxide from the column to the compressor, a heat exchanger (10), a duct for sending the mixture of water and of antifreeze agent to the heat exchanger upstream of the column, a duct for sending a liquid rich in carbon dioxide to the exchanger in order to cool the water and the antifreeze agent, with this liquid originating from an external source and/or being constituted at least partially by a portion of the compressed then liquefied carbon dioxide **characterised in that** it comprises means for sending a gas formed in the exchanger (10) by the vaporisation of the liquid that is rich in carbon dioxide and means for mixing with the flow of gas (9) that is rich in carbon dioxide downstream or at an interstage of the compressor (20).

6. Apparatus according to claim 5 comprising a duct for sending a gas, formed in the exchanger (10) by the vaporisation of the liquid that is rich in carbon dioxide, to the top of the column (3).

7. Apparatus according to claim 5 or 6 comprising a turbine (22) to expand the gas formed by the vaporisation of the liquid that is rich in carbon dioxide.

8. Apparatus according to one of claims 5 to 7 wherein the compressor is made of carbon steel or low alloyed steel.

9. Installation for the liquefaction of gas that is rich in carbon dioxide comprising an apparatus according to one of claims 5 to 8 and at least one means of liquefaction (28) of a gas that is rich in carbon dioxide, with this means being connected to the exchanger.
